# EUROPÄISCHE PATENTSCHRIFT

(11) **EP 2 934 814 B1**
(45) Veröffentlichungstag und Bekanntmachung des Hinweises auf die Patenterteilung: **14.06.2017**
(21) Anmeldenummer: 13869676.0
(22) Anmeldetag: 18.12.2013
(51) Int. Cl.: B23P 11/00, B23P 11/02, F01L 1/047, F16H 53/02

(54) **VERFAHREN ZUM ZUSAMMENBAU EINER NOCKENWELLE**
METHOD FOR ASSEMBLING A CAMSHAFT
PROCÉDÉ D'ASSEMBLAGE D'UN ARBRE À CAMES

(30) Priorität: 21.12.2012 DE 102012025442
(43) Veröffentlichungstag der Anmeldung: 28.10.2015
(73) Patentinhaber: ThyssenKrupp Presta TecCenter AG, 9492 Eschen (LI)
(72) Erfinder: STAPPELMANN, Andreas, 09116 Chemnitz (DE); WIESNER, Peter, LI-9492 Mauren (LI); MUHSFELDT, Falk, 07751 Bucha (DE)
(74) Vertreter: thyssenkrupp Intellectual Property GmbH
(86) Internationale Anmeldenummer: PCT/EP2013/003843
(87) Internationale Veröffentlichungsnummer: WO 2014/101991

(56) Entgegenhaltungen:
- WO-A1-2011/160240
- WO-A1-2012/031770
- WO-A1-2013/156564
- SEIM K ET AL: "ERHOEHUNG DER SICHERHEIT GEBAUTER NOCKENWELLEN DURCH EINSATZ BESCHICHTETER PRESSVERBINDUNGEN. ÖTHE INCREASE OF SAFETY OF MOUNTED CAMSHAFTS THROUGH THE INTRODUCTION OF PRESS FITTED JOINTS WITH UNORGANIC AND COMPOUND STABLE CONVERSION COATINGS", MTZ MOTORTECHNISCHE ZEITSCHRIFT, VIEWEG VERLAG, WIESBADEN, DE, Bd. 57, Nr. 5, 1. Mai 1996 (1996-05-01), Seiten 284-291, XP000583588, ISSN: 0024-8525

## Beschreibung

Die Erfindung betrifft ein Verfahren zum Zusammenbau einer Nockenwelle und eines Motormoduls für einen Kfz-Motor, das eine Zylinderkopfhaube und eine in der Zylinderkopfhaube drehbar gelagerte Nockenwelle umfasst.

Um den Montageaufwand beim Zusammenbau eines Kfz-Motors zu verringern und die Lagerhaltungs- und Logistikkosten bei der Motormontage zu reduzieren, werden den Automobilherstellern von den Zulieferern bereits fertig zusammengebaute Motormodule unmittelbar an das Montageband geliefert. Solche Motormodule bestehen z.B. aus einer Zylinderkopfhaube und einer darin gelagerten Nockenwelle. Im Rahmen des Motorzusammenbaus muss dann lediglich dieses Modul an dem Zylinderkopf des Motors befestigt werden.

In der WO2012/031770 A1 wird ein Montageverfahren für ein Motormodul bestehend aus einer Zylinderkopfhaube und einer darin gelagerten Nockenwelle, beschrieben. Bei diesem bekannten Montageverfahren ist eine Zylinderkopfhaube mit Durchführungen vorgesehen, durch welche die zylindrische Tragwelle der späteren Nockenwelle hindurch gesteckt wird. Vorher werden die zu befestigenden Bauteile wie beispielsweise Nocken, Sensorräder usw. an solchen Axialpositionen positioniert, welche nicht den Axialpositionen entsprechen, die diese Bauteile auf der fertig gebauten Nockenwelle einnehmen. Im nächsten Schritt wird die Tragwelle durch die Durchführungen in der Zylinderkopfhaube und durch Durchgangsöffnungen in den Bauteilen durchgeschoben. Vorab werden die auf der Tragwelle zu befestigenden Bauteile vor dem Durchschieben der Tragwelle erwärmt und die Tragwelle abgekühlt, um ein kraftfreies Einschieben der Tragwelle zu gewährleisten. Die Bauteile werden nach dem Einschieben der Tragwelle zunächst lösbar auf jeweils zugeordneten Durchmesseraufweitungen fixiert. In späteren Schritten werden die Bauteile von den zugeordneten Durchmesseraufweitungen gelöst und in ihrer Winkelposition eingestellt. Danach werden sie auf denselben zugeordneten Durchmesseraufweitungen durch Aufpressen oder Einpressen befestigt.

Dieses Verfahren hat den Nachteil, dass die Durchmesseraufweitungen durch die lösbare Fixierung verformt wurden. Diese Erstverformung reduziert die Verbindungsfestigkeit zwischen den Bauteilen und der Tragwelle, die sich bei der abschließenden Verformung durch Einpressen oder Aufpressen ergibt. Bei Bauteilen mit einer Verzahnung in der Durchgangsöffnung ergibt sich der weitere Nachteil, dass die Verzahnung bei der lösbaren Fixierung Rillen in der Durchmesseraufweitung hinterlässt. Diese Rillen reduzieren die Genauigkeit bei der späteren Einstellung der Winkelposition. Überraschenderweise hat sich herausgestellt, dass beim Aufpressen oder Einpressen der Bauteile die Verzahnung dazu tendiert, in die ursprünglichen Rillen zurückzukehren. Die Rillen führen also zu einem zusätzlichen Drehmoment, das die Winkelposition der Bauteile während des Einpressens oder Aufpressens verändert und so Abweichungen von der erforderlichen Winkelposition bewirkt.

Aufgabe der vorliegenden Erfindung ist es diese Nachteile zu überwinden, indem keine Erstverformung der Durchmesseraufweitungen stattfindet, auf denen die Bauteile befestigt werden.

Diese Aufgabe wird gelöst durch ein Verfahren zum Zusammenbau einer Nockenwelle aus einer Tragwelle und mit der Tragwelle zu verbindenden Bauteilen. Dabei weisen die Bauteile Durchgangsöffnungen zur Aufnahme der Tragwelle auf. Das Verfahren umfasst unter anderem die folgenden Schritte:
▪ es wird eine Tragwelle zur Verfügung gestellt, welche in ersten Bereichen, in denen die Bauteile befestigt werden sollen, erste Durchmesseraufweitungen aufweist, und in zweiten Bereichen, in denen die Bauteile vorpositioniert werden sollen, zweite Durchmesseraufweitungen aufweist, wobei der Durchmesser in den zweiten Bereichen geringer ist als der Durchmesser in den ersten Bereichen;
▪ die Tragwelle wird gekühlt und/oder die Bauteile werden erwärmt, so dass die Tragwelle mit ihren ersten und zweiten Durchmesseraufweitungen durch die Durchgangsöffnungen der Bauteile hindurch geschoben werden kann;
▪ die Tragwelle wird durch die Durchgangsöffnungen hindurch geschoben, so dass jedes Bauteil einem zweiten Bereich zugeordnet ist;
▪ die Tragwelle wird erwärmt und/oder die Bauteile werden abgekühlt, so dass der Durchmesser der Durchgangsöffnungen der Bauteile kleiner ist als der Durchmesser der zugeordneten zweiten Durchmesseraufweitungen;
▪ es wird eine vorbestimmte Überdeckung der Bauteile mit den, den Bauteilen zugeordneten, zweiten Bereichen hergestellt, so dass die Bauteile in den zugeordneten zweiten Bereichen lösbar fixiert gehalten werden.
▪ die Bauteile werden auf die ihnen zugeordneten ersten Durchmesseraufweitungen aufgepresst oder die ersten Durchmesseraufweitungen werden in die zugeordneten Durchgangsöffnungen der Bauteile eingepresst, wobei jeweils die erforderliche Winkelposition jedes Bauteils relativ zu der Tragwelle vor, während oder nach dem Aufpressen oder Einpressen eingestellt wird.

Die Erfindungsgemäße Aufgabe wird weiterhin gelöst durch ein Verfahren zum Zusammenbau eines Moduls für einen Kraftfahrzeugmotor, welches mindestens eine Zylinderkopfhaube mit Lageraufnahmen und eine in den Lageraufnahmen gelagerte Nockenwelle umfasst. Dabei wird die Nockenwelle im Zuge des Zusammenbaus des Moduls aus einer Tragwelle und mit der Tragwelle zu verbindenden Bauteilen gebaut. Hierbei weisen die Bauteile Durchgangsöffnungen zur Aufnahme der Tragwelle auf. Das Verfahren umfasst unter anderem die folgenden Verfahrensschritte:
▪ es wird eine Tragwelle zur Verfügung gestellt, welche in ersten Bereichen, in denen die Bauteile befestigt werden sollen, erste Durchmesseraufweitungen aufweist, und in zweiten Bereichen, in denen die Bauteile vorpositioniert werden sollen, zweite Durchmesseraufweitungen aufweist, wobei der Durchmesser in den zweiten Bereichen geringer ist als der Durchmesser in den ersten Bereichen, und in den Bereichen, in denen die fertig gebaute Nockenwelle in den Lageraufnahmen gelagert sein soll, Lagerabschnitte aufweist;
▪ die auf der Tragwelle zu befestigenden Bauteile werden in einer vorbestimmten Reihenfolge so positioniert, dass ihre Durchgangsöffnungen fluchtend zu den Lageraufnahmen der Zylinderkopfhaube angeordnet sind;
▪ die Tragwelle wird gekühlt und/oder die Bauteile werden erwärmt, so dass die Tragwelle mit ihren ersten und zweiten Durchmesseraufweitungen und Lagerabschnitten durch die Durchgangsöffnungen der Bauteile hindurch geschoben werden kann;
▪ die Tragwelle wird durch die Lageraufnahmen und die Durchgangsöffnungen hindurch geschoben, so dass in jeder Lageraufnahme ein Lagerabschnitt der Tragwelle angeordnet ist und jedes Bauteil einem zweiten Bereich zugeordnet ist;
▪ die Tragwelle wird erwärmt und/oder die Bauteile werden abgekühlt, so dass der Durchmesser der Durchgangsöffnungen der Bauteile kleiner ist als der Durchmesser der zugeordneten zweiten Durchmesseraufweitungen;
▪ es wird eine vorbestimmte Überdeckung der Bauteile mit der den Bauteilen zugeordneten zweiten Bereichen hergestellt, so dass die Bauteile in den zugeordneten zweiten Bereichen lösbar fixiert gehalten werden.
▪ die Bauteile werden auf die ihnen zugeordneten ersten Durchmesseraufweitungen aufgepresst oder die ersten Durchmesseraufweitungen werden in die zugeordneten Durchgangsöffnungen der Bauteile eingepresst, wobei jeweils die erforderliche Winkelposition jedes Bauteils relativ zu der Tragwelle vor, während oder nach dem Aufpressen oder Einpressen eingestellt wird.

Während die Tragwelle durch die Durchgangsöffnungen hindurch geschoben wird, kann es vorteilhaft sein, wenn man zusätzliche Schritte unternimmt, um die Temperaturdifferenz zwischen Tragwelle und Bauteilen aufrecht zu erhalten. Dies kann zum Beispiel in einer Isolierung der Bauteile bestehen, damit diese sich nicht zu schnell abkühlen oder in einer entsprechenden Isolierung der Tragwelle. Alternativ können die Bauteile auch in eine Wärmvorrichtung eingebracht werden, die die Bauteile während des Montageverfahrens nachheizt bzw. auf der vorbestimmten Temperatur hält.

Bei einer speziellen Weiterbildung der Erfindung werden die Bauteile vor dem beschriebenen Temperaturausgleich, bei dem die Tragwelle erwärmt und/oder die Bauteile abgekühlt werden, so positioniert, dass gleichzeitig mit dem Temperaturausgleich die lösbare Fixierung in den zweiten Bereichen erfolgt. Die Bauteile werden also auf die zweiten Bereiche aufgeschrumpft. Dies hat den Vorteil, dass ein zusätzlicher Verfahrensschritt eingespart werden kann und das Verfahren besonders effizient abläuft.

Bei einer Ausführungsform des Verfahrens wird die Einstellung der jeweils erforderlichen Winkelposition jedes Bauteils relativ zu der Tragwelle vor dem Aufpressen oder Einpressen durch einfaches Verdrehen der Tragwelle um einen bestimmten Winkel vorgenommen. Auf diese Weise lässt sich das Verfahren besonders gut automatisieren.

Vor der Einstellung der Winkelposition des Bauteils relativ zu der Tragwelle kann das Bauteil entweder zunächst von den zugeordneten zweiten Bereichen gelöst oder die Winkelposition kann eingestellt werden während das Bauteil in dem zugeordneten zweiten Bereich lösbar fixiert ist. In beiden Fällen wird das Bauteil abschließend durch Aufpressen oder Einpressen befestigt. Der erste Fall hat den Vorteil, dass kein großer Kraftaufwand zu Relativdrehung von Bauteil und Tragwelle erforderlich ist, da das Bauteil während des Verfahrensschrittes frei drehbar ist. Beim zweiten Fall wird dagegen ein zusätzlicher Verfahrensschritt eingespart, bei dem Bauteil und Achse in Achsrichtung zueinander bewegt werden müssen. Dies reduziert die Anforderungen an die Automatisierung.

Bei einer dritten Alternative wird die Winkelposition der Bauteile relativ zu der Tragwelle eingestellt, während die Bauteile in den ersten Bereichen befestigt sind. Hierdurch kann erneut ein Verfahrensschritt eingespart werden. Insbesondere hat sich gezeigt, dass eine Drehbewegung die im Bereich der erforderlichen Winkelposition die Verbindungsfestigkeit erhöhen kann. Dies ist insbesondere dann der Fall, wenn die zur Verfügung gestellte Tragwelle in den ersten Bereichen und/oder das Bauteil innerhalb der Durchgangsöffnung eine Beschichtung aufweist. Durch das Verdrehen kommt es zu einer Diffusion der Beschichtung in die oberflächennahen Regionen von Bauteil und Tragwelle, die die Verbindungsfestigkeit weiter erhöht. Somit kann die hergestellte Nockenwelle ein größeres Drehmoment zwischen Tragwelle und Bauteil übertragen. Mögliche Beschichtungen für Tragwellen und Bauteile aus Stahl enthalten zum Beispiel Zink, Phosphat oder Kupfer.

Diese Diffusion kann noch verstärkt werden, wenn die Bauteile im letzten Schritt hochfrequent um die erforderliche Winkelposition verdreht werden bevor sie in der erforderlichen Winkelposition belassen werden. Dieses zusätzliche Verdrehen kann selbstverständlich auch vorgenommen werden, nachdem die erforderliche Winkelposition mittels der ersten oder zweiten Alternative eingestellt wurde. Durch das hochfrequente Verdrehen wird Energie in die Beschichtung eingetragen, so dass es zu verstärkter Diffusion kommt. Es hat sich gezeigt, dass die erforderliche Amplitude der Drehung (also der Winkel, um den gedreht wird) mit steigender Frequenz abnimmt. Die Amplitude der Drehung kann bis zu 360° betragen. Gute Ergebnisse haben sich bei Amplituden im Bereich von 30° bis 60° gezeigt. Typische Frequenzen liegen im Bereich zwischen 10 Hz und 30 Hz. Frequenzen bis 100 Hz, bevorzugt bis 150Hz oder höher, sind ebenfalls möglich.

In einigen Fällen können die Bauteile eine Verzahnung in der Durchgangsöffnung aufweisen. Hierdurch wird ebenfalls das übertragbare Drehmoment erhöht.

Bei einer weitergebildeten Ausführungsform des Verfahrens ist die Tragwelle als Hohlwelle ausgebildet, in deren Innerem eine Innenwelle konzentrisch zur Hohlwelle angeordnet ist. Dabei ist die Innenwelle relativ zur Hohlwelle verdrehbar. Zusätzlich ist mindestens ein Bauteil vorgesehen, dass nach dem Temperaturausgleich gemäß nicht mit der Tragwelle verbunden wird, sondern welches verdrehfest mit der Innenwelle verbunden wird. Insbesondere wird dieses Bauteils mittels einer Stiftverbindung mit der Innenwelle verbunden. Hierzu ist in der als Hohlwelle ausgebildeten Tragwelle eine Öffnung vorgesehen. Desweiteren hat die Innenwelle eine erste Bohrung und das Bauteil eine zweite Bohrung. Zum Befestigen werden die Öffnung, die erste Bohrung und die zweite Bohrung miteinander fluchtend positioniert und es wird ein Verbindungsstift durch die Öffnung in die erste Bohrung und in die zweite Bohrung eingepresst.

Im Folgenden wird die Erfindung anhand von schematischen, das Prinzip der Erfindung darstellenden Zeichnungen näher erläutert. Im Einzelnen zeigen
Fig. 1 ein Kraftfahrzeugmodul in Form einer Zylinderkopfhaube mit einer eingebauten Nockenwelle aus Bauteilen und Tragwelle;
Fig. 2 ein Bauteil in Form einer Nocke, die beim Zusammenbau der Nockenwelle Tragwelle zu befestigen ist;
Fig. 3 eine Detailvergrößerung der Tragwelle mit ersten und zweiten Durchmesseraufweitungen;
Fig. 4a - 4d verschiedene Verfahrensschritte zwischen Vorpositionierung und Befestigung eines Bauteils bei einer ersten Ausführungsform der Erfindung;
Fig. 5a - 5c verschiedene Verfahrensschritte zwischen Vorpositionierung und Befestigung eines Bauteils bei einer zweiten Ausführungsform der Erfindung;
Fig. 6a - 6b verschiedene Verfahrensschritte zwischen Vorpositionierung und Befestigung eines Bauteils bei einer dritten Ausführungsform der Erfindung;
Fig. 6c eine weitere Ausführungsform bei der Winkeleinstellung und Befestigung mittels einer schraubenförmigen Bewegung erfolgt;
Fig. 7 ein Bauteil in Form einer Nocke mit einer Verzahnung in der Durchgangsöffnung;
Fig. 8 ein befestigtes Bauteil, bei dem die zweiten Bereiche zumindest teilweise innerhalb der Durchgangsöffnung liegen;
Fig. 9 eine schematische Darstellung eines Nockenwellenabschnitts mit einer Beschichtung zwischen Tragwelle und Bauteil;
Fig. 10 eine schematische Darstellung einer hohlen Tragwelle für eine verstellbare Nockenwelle mit zwei unterschiedlichen Bauteilen 5, von denen nur eines mit der Tragwelle drehfest verbunden wird;
Fig. 11 eine zusammengebaute verstellbare Nockenwelle mit hohler Tragwelle und darin konzentrisch angeordneter, relativ zur Tragwelle verdrehbarer Innenwelle;
Fig. 12a und Fig. 12b. ein Bauteil mit einer trichterartigen Mündungsöffnung.

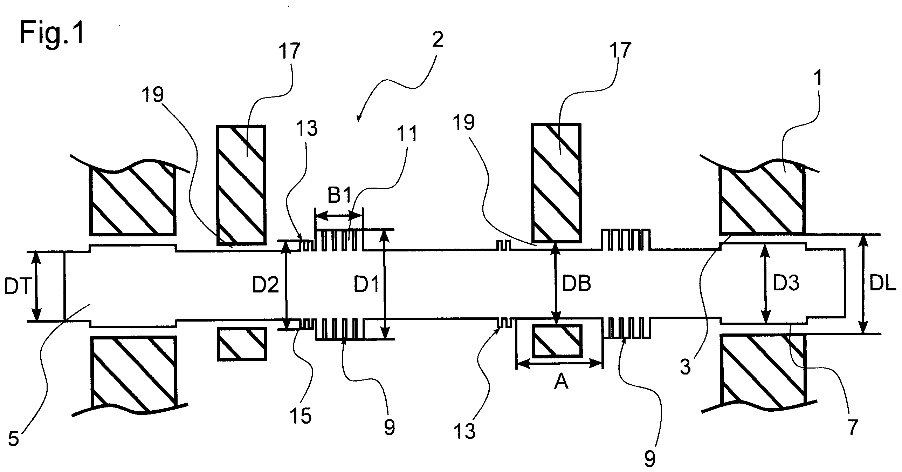

In Figur 1 ist eine Zylinderkopfhaube 1 mit Lageraufnahmen 3 dargestellt. Die Darstellung ist rein schematisch gehalten, und um das Verständnis zu erleichtern, sind von der Zylinderkopfhaube 1 keine weiteren Teile oder Details dargestellt. In den Lageraufnahmen 3 gehalten ist eine Tragwelle 5. Die Tragwelle 5 weist Lagerabschnitte 7 auf, die zusammen mit den Lageraufnahmen 3 Gleitlager für die Tragwelle 5 bilden. Die Lagerabschnitte der Tragwelle haben einen Außendurchmesser D3. Die Tragwelle hat einen Durchmesser DT. Der Durchmesser D3 der Lagerabschnitte kann größer sein als der Durchmesser der Tragwelle (wie in Figur 1 dargestellt). Alternativ können die beiden Durchmesser auch gleich groß sein oder der Durchmesser D3 der Lagerabschnitte kann auch kleiner sein als der Durchmesser DT der Tragwelle. Dies ist zum Beispiel dann der Fall, wenn die Lagerstelle zum Beispiel durch Schleifen bearbeitet wurde.

Die Tragwelle 5 weist weiterhin in den ersten Bereichen 9 erste Durchmesseraufweitungen 11 auf. Die ersten Durchmesseraufweitungen 11 haben einen Außendurchmesser D1. Weiterhin weist die Tragwelle zweite Bereiche 13 auf mit zweiten Durchmesseraufweitungen 15, die einen Außendurchmesser D2 haben. Die ersten Durchmesseraufweitungen 11 und die zweiten Durchmesseraufweitungen 15 sind rotationssymmetrisch um die Drehachse der Tragwelle 5. Der Durchmesser D2 in den zweiten Bereichen 13 ist kleiner als der Durchmesser D1 in den ersten Bereichen 9. Im linken Teil von Figur 1 grenzen die ersten Bereiche 9 unmittelbar an die zweiten Bereiche 13 an. Im Gegensatz dazu ist im rechten Teil von Figur 1 ein axialer Abstand A zwischen den ersten Bereichen 9 und den zweiten Bereichen 13 vorgesehen.

Auf der Tragwelle sind zwei Bauteile 17 angeordnet. Die Bauteile 17 haben jeweils eine Durchgangsöffnung 19, durch die die Tragwelle 5 geführt ist. Der Innendurchmesser der Bauteile ist mit DB gekennzeichnet. Das rechts dargestellte Bauteil 17 ist zwischen einem ersten Bereich 9 und einem zweiten Bereich 13 angeordnet. Der Innendurchmesser DB der Bauteile ist kleiner als der Durchmesser D1 in den ersten Bereichen 9 und der Durchmesser D2 in den zweiten Bereichen. Somit kann eine Überdeckung zwischen Bauteil 17 und ersten Bereichen 9 bzw. zweiten Bereichen 13 hergestellt werden, um das Bauteil 17 zu fixieren.

Die in Figur 1 links dargestellten Durchmesseraufweitungen 11 und 15 ist durch rollieren hergestellt worden. Die Breite B1 der ersten Bereiche 9 ist auf die Breite des auf der ersten Durchmesseraufweitung 11 zu befestigenden Bauteils 17 abgestimmt. Die in Figur 1 rechts dargestellten Durchmesseraufweitungen 11 und 15 sind dagegen durch einen Schleifprozess hergestellt worden, d.h. die Tragwelle 5 wurde ausgehend von einem größeren Durchmesser (ebenfalls z.B. eine Rollierung) auf die Durchmesser D1 bzw. D2 abgeschliffen. In den nachfolgend dargestellten Ausführungsbeispielen der Erfindung werden allerdings nur noch durch Rollierungen hergestellte Durchmesseraufweitungen dargestellt.

Beim Zusammenfügen von Tragwelle, Zylinderkopfhaube und Bauteilen zum in Figur 1 gezeigten Modul werden die auf der Tragwelle 5 zu befestigenden Bauteile 17 in einer vorbestimmten Reihenfolge so positioniert, dass ihre Durchgangsöffnungen 19 fluchtend zu den Lageraufnahmen 3 der Zylinderkopfhaube 1 angeordnet sind.
Die Winkelausrichtung der Bauteile 17 erfolgt später, so dass in diesem Verfahrensschritt nicht auf die Winkelausrichtung der Bauteile 17 zur Tragwelle 5 geachtet werden muss. Für das weitere Verfahren ist es jedoch von Vorteil, wenn z.B. alle Nockenspitzen in die gleich Richtung zeigen. In einem nächsten Schritt wird die Tragwelle 5 gekühlt und/oder die Bauteile 17 werden erwärmt, so dass die Tragwelle 5 mit den ersten Durchmesseraufweitungen 11, den zweiten Durchmesseraufweitungen 15 und den Lagerabschnitten 7 durch die Durchgangsöffnungen der Bauteile 19 und die Lageraufnahmen 3 hindurch geschoben werden kann. Ein geeignetes Aufwärmverfahren ist das Erwärmen mittels Induktion. Die Tragwelle 5 kann beispielsweise mit flüssigem Stickstoff oder einem anderen Kühlmittel abgekühlt werden.

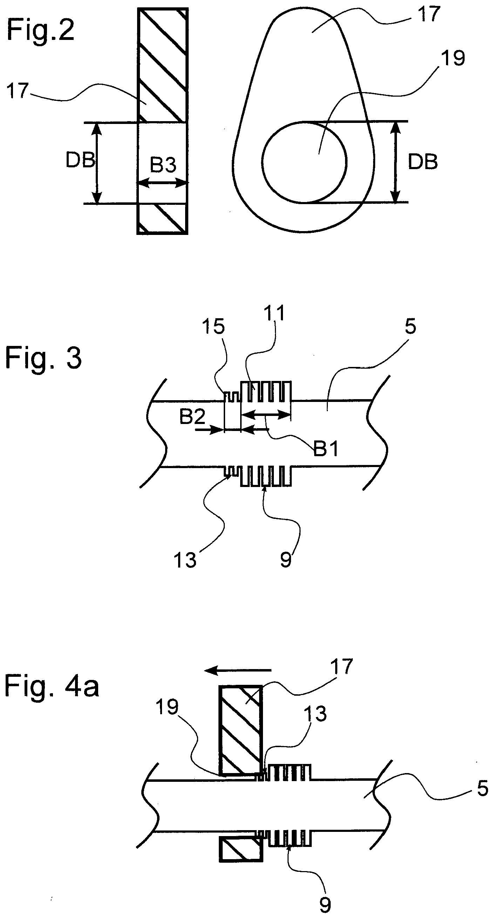

Die Durchmesser der Lageraufnahmen DL, der Durchgangsöffnungen DB und der ersten Durchmesseraufweitungen D1 wurden bei der Herstellung so bemessen, dass die Durchmesser D1' und D3' der abgekühlten Tragwelle 4 geringfügig kleiner sind als der Durchmesser DL der Lageraufnahmen 3 und die Durchmesser DB' der erwärmten Bauteile 17. Auf diese Weise kann die Tragwelle 5 einfach durch die Lageraufnahmen 3 und die Durchgangsöffnungen 19 hindurch geschoben werden. Beim Einfügen der Tragwelle 5 sind die Bauteile 17 derart positioniert, dass in jeder Lageraufnahme 3 ein Lagerabschnitt 7 der Tragwelle 5 angeordnet ist und jedes Bauteil 17 einem zweiten Bereich 13 zugeordnet ist. Diese Zuordnung kann zum Beispiel darin bestehen, dass jedes Bauteil 17 benachbart zu dem zugeordneten zweiten Bereich 13 angeordnet ist, wie in Figur 1 dargestellt, oder auch darin, dass jedes Bauteil 17 einen Überlapp mit dem zugeordneten zweiten Bereich 13 aufweist. Diese Variante ist in Figur 4a dargestellt. Nach dem Einfügen der Tragwelle 5 wird ein Temperaturausgleich durchgeführt, bei dem die Tragwelle 5 erwärmt und/oder die Bauteile 17 abgekühlt werden, so dass eine Überdeckung hergestellt ist, das heißt, der Durchmesser der Durchgangsöffnungen DB der Bauteile 17 kleiner ist als der Durchmesser D2 der zugeordneten zweiten Durchmesseraufweitungen 15.

Figur 2 zeigt ein Bauteil 17 bei Umgebungstemperatur, das auf der Tragwelle 5 im Zuge des Zusammenbaus der Nockenwelle bzw. des Moduls befestigt werden soll. Gezeigt sind zwei orthogonale Schnitte des Bauteils. Das beispielhaft dargestellte Bauteil 17 ist ein Nocken, der eine Durchgangsöffnung 19 mit einem Durchmesser DB aufweist. Der Nocken hat eine Breite B3 in axialer Richtung. Mit dem erfindungsgemäßen Verfahren lassen sich jedoch nicht nur Nocken, sondern auch andere Bauteile wie z.B. Sensorräder u.ä. lagegerecht auf der Tragwelle 5 befestigen. Im Rahmen der vorliegenden Beschreibung eines konkreten Ausführungsbeispiels der Erfindung wird der Einfachheit halber lediglich das Beispiel von Nocken als auf der Tragwelle zu befestigenden Bauteilen betrachtet.

In Figur 3 ist eine Detailvergrößerung eines Abschnitts der Tragwelle 5 mit einer ersten Durchmesseraufweitung 11 und einer zweiten Durchmesseraufweitung 15 gezeigt. Beide Durchmesseraufweitungen 11 und 15 sind rotationssymmetrisch um die Drehachse der Tragwelle. Der erste Bereich 9, der die erste Durchmesseraufweitung 11 aufweist, hat eine Breite B1. Der zweite Bereich 13, der die zweite Durchmesseraufweitung 15 aufweist, hat eine Breite B2.

Die Figuren 4a - 4d zeigen schematisch verschiedene weitere Verfahrensschritte bei einer Variante der Winkeleinstellung zwischen Bauteil 17 und Tragwelle 5. In Figur 4a weist das Bauteil 17 eine Überdeckung mit dem zugeordneten zweiten Bereich 13 auf, so dass es in dem zugeordneten zweiten Bereich lösbar fixiert ist. Dieser Ausgangszustand kann auf verschiedene Weisen erreicht werden. In einer Variante werden die Bauteile 17 relativ zur Tragwelle 5 vor dem beschriebenen Temperaturausgleich so positioniert, dass beim Temperaturausgleich zwischen Welle 5 und Bauteilen 17 es gleichzeitig zu einer vorbestimmten Überdeckung von Bauteil 17 mit dem ihm zugeordneten zweiten Bereich 13 kommt. Oder anders ausgedrückt, Bauteil 17 wird auf den zweiten Bereich 13 aufgeschrumpft. In einer alternativen Ausführungsform werden die Bauteile 17 so positioniert, dass sie nach dem Temperaturausgleich benachbart zu dem zugeordneten zweiten Bereich 13 angeordnet sind. Die lösbare Fixierung mittels Überdeckung wird dann durch Bewegen von Tragwelle 5 oder Bauteil 17 herbeigeführt. In diesem Zustand sind das Bauteil 17 vorpositioniert auf der Tragwelle 5. Ausgehend von diesem Ausgangszustand zeigen die Figuren 4a - 4d nachfolgende Verfahrensschritte. In dem Schritt nach Figur 4a wird das Bauteil 17 zunächst von dem zugeordneten zweiten Bereich 13 gelöst wird. Da der Durchmesser in dem zweiten Bereich 19 geringer ist als der Durchmesser in dem ersten Bereich 9, kann das Bauteil 17 ohne große Krafteinwirkung von dem zweiten Bereich 13 gelöst werden. Zudem tritt nur eine geringe Verformung des Bauteils 17 innerhalb der Durchgangsöffnung 19 auf und auch nur im Bereich der ursprünglichen Überdeckung. Die Form des Bauteils 17 wird demnach nur geringfügig beeinträchtigt. Jede Verformung des Bauteils 17 oder der Tragwelle 5 in den späteren Befestigungsbereichen bei früheren Verfahrensschritten sollte vermieden werden, da dies negative Auswirkungen auf die Verbindungsfestigkeit zwischen Bauteil 17 und Tragwelle 5 haben kann.

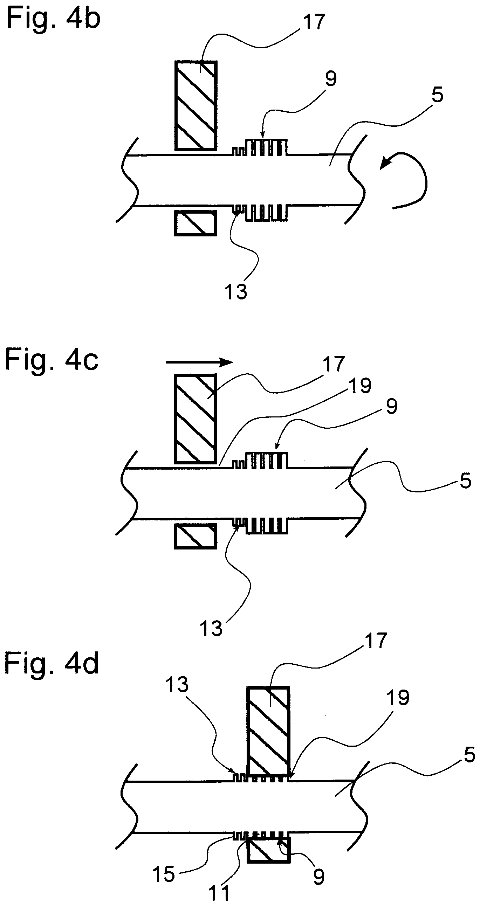

Das Lösen des Bauteils 17 ist in Figur 4a durch den Pfeil angedeutet. Als nächstes wird die Winkelposition des Bauteils 17 relativ zur Tragwelle 5 eingestellt. Dies geschieht entweder durch Drehen der Tragwelle 5 (angedeutet durch den Pfeil in Figur 4b) oder durch Drehen des Bauteils 17. Ist die gewünschte Winkelposition erreicht wird das Bauteil 17 auf den ihm zugeordneten ersten Bereich 9 aufgepresst oder der zugeordnete erste Bereich 9 wird in die Durchgangsöffnung 19 des Bauteils 17 einpresst. Angedeutet durch den Pfeil in Figur 4c. Das Ergebnis der beschriebenen Verfahrensschritte ist in Figur 4d dargestellt. Der gezeigte Nockenwellenabschnitt umfasst eine Tragwelle 5 und ein Bauteil 17 mit einer Durchgangsöffnung 19 zur Aufnahme der Tragwelle 5, wobei die Tragwelle 5 einen ersten Bereich 9 aufweist, in dem das Bauteil 17 befestigt ist. Zudem weist der Nockenwellenabschnitt eine erste Durchmesseraufweitung 11 und eine zweite Durchmesseraufweitung 15 auf. Die zweite Durchmesseraufweitung 15 ist rotationssymmetrisch zur Drehachse der Tragwelle 5 und am Ort eines zweiten Bereichs 13 angeordnet. Der Durchmesser in dem zweiten Bereich 13 ist hierbei geringer als der Durchmesser im ersten Bereich 9.

Beim Aufpressen oder Einpressen (gezeigt in Figur 4c) wird das Bauteil über den zweiten Bereich 13 hinwegbewegt. Dies kann vermieden werden, wenn zwischen dem ersten zugeordneten Bereiche 9 und dem zweiten zugeordneten Bereiche 13 ein axialer Abstand A vorgesehen ist. Diese Variante ist im rechten Teil von Figur 1 gezeigt. Das Bauteil 17 kann bei dieser Variante zunächst mit der einen Seite auf dem zweiten Bereich 13 lösbar fixiert werden und später mit der gegenüberliegenden Seite auf dem zugeordneten ersten Bereich 9 durch Aufpressen oder Einpressen befestigt werden. Dies hat den Vorteil, dass eine Verformung der Durchgangsöffnung 19 beim Bewegen über den zweiten Bereich 13 hinweg vermieden werden kann. Eine derartige Vorverformung kann die spätere Verbindungsfestigkeit des Bauteils 17 beeinflussen. Bei dieser Variante tritt nur die endgültige Verformung beim Befestigen auf dem zugeordneten ersten Bereich 9 durch Aufpressen oder Einpressen auf. Die alternative Ausführungsform, die in den Figuren 4a - 4d gezeigt ist, weist zweite Bereiche 13 auf, die unmittelbar an die ersten Bereiche 9 angrenzen. Dies ermöglicht eine sehr kompakte Bauweise.

Ganz allgemein besteht der Vorteil der Vorpositionierung und der lösbaren Fixierung vor dem endgültigen Befestigen darin, dass die Herstellung von Nockenwelle bzw. Motormodul einfacher automatisiert werden kann. Wenn zum Beispiel die Bauteile 17 durch Nocken gebildet sind, können alle Nocken 17 derart lösbar auf der Tragwelle 5 fixiert werden, dass ihre Nockenerhebungen in die gleiche Richtung weisen. Der Vorteil dieser Vorgehensweise besteht darin, dass die nach dem Positionieren der Nocken auszuführende Pressverbindung zwischen Nocken 17 und Tragwelle 5 auf einfache Weise in einem automatisierten Verfahrensschritt erfolgen kann. Im Rahmen einer automatisierten Herstellung der Pressverbindung zwischen den Bauteilen/Nocken 17 und der Tragwelle 5 mit Hilfe einer Aufpressvorrichtung oder Einpressvorrichtung ist es vorteilhaft, wenn die Relativposition der Bauteile/Nocken 17 fest vorgegeben ist. Die Vorrichtung benötigt dann keine Mittel, um für jedes Bauteil/Nocken 17 dessen tatsächlich vorhandene Relativposition in Umfangsrichtung zu ermitteln, bevor durch Verdrehen der Tragwelle relativ zum Bauteil/zur Nocke 17 die erforderliche Winkellage des Bauteils/der Nocke 17 auf der Tragwelle 5 eingestellt wird.

Anders ausgedrückt: Wenn die relative Winkellage der Bauteile/Nocken 17 zur Tragwelle 5 nach deren Positionierung und vor der Herstellung der Pressverbindung nicht durch eine temporäre Fixierung der Bauteile/Nocken 17 auf der Tragwelle 5 vorbekannt ist, dann muss vor dem Herstellen der Pressverbindung zuerst die relative Winkellage der Bauteile/Nocken 17 ermittelt werden, bevor bestimmt werden kann, um welchen Winkel die Tragwelle 5 verdreht werden muss, um eine gewünschte Winkellage des Bauteils/Nockens 17 auf der Tragwelle 5 sicherzustellen. Dies erschwert die Automatisierung des Aufpressens der Bauteile/Nocken 17auf die Tragwelle 5 bzw. des Einpressens der Tragwelle 5 in die Bauteile/Nocken 17. Wenn dagegen die Bauteile/Nocken 17 nach dem Positionieren immer in der gleichen Winkellage lösbar auf der Tragwelle 5 fixiert sind, beispielsweise in einer Orientierung, bei der alle Nockenspitzen in die gleich Richtung zeigen, dann kann der Arbeitsschritt der Ermittlung der relativen Winkellage der Bauteile/Nocken 17 relativ zur Tragwelle 5 entfallen, denn die relative Winkellage ist vorbekannt. Die Vorrichtung zu Herstellung der Pressverbindung zwischen den Bauteilen/Nocken 17 und der Tragwelle 5 kann daher wesentlich einfacher ausgestaltet sein und das erfindungsgemäße Verfahren zum Zusammenbau der Nockenwelle kann schneller ablaufen. Die Taktzeit wird deutlich erhöht und ein wirtschaftlicherer Betrieb der Fertigungsanlage erreicht.

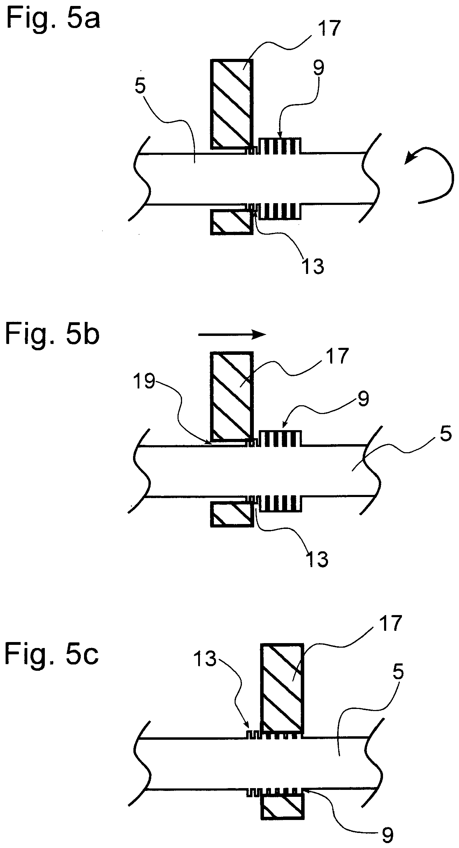

Die Figuren 5a - 5c zeigen schematisch verschiedene Verfahrensschritte bei einer alternativen Variante der Winkeleinstellung zwischen Bauteil 17 und Tragwelle 5. Bei dieser Variante wird die Winkelposition des Bauteils 17 eingestellt, während das Bauteil 17 in dem zugeordneten zweiten Bereich 13 lösbar fixiert ist. In Figur 5a ist dies durch den Pfeil angedeutet. Dies hat den Vorteil, dass der zusätzliche Schritt des Lösens von der Fixierung (dargestellt in Figur 4a) entfällt und das Verfahren somit effizienter durchgeführt werden kann. Die weiteren Schritte, die in den Figuren 5b und 5c gezeigt sind, erfolgen analog zu der bereits beschriebenen Variante (vgl. Figuren 4c und 4d)

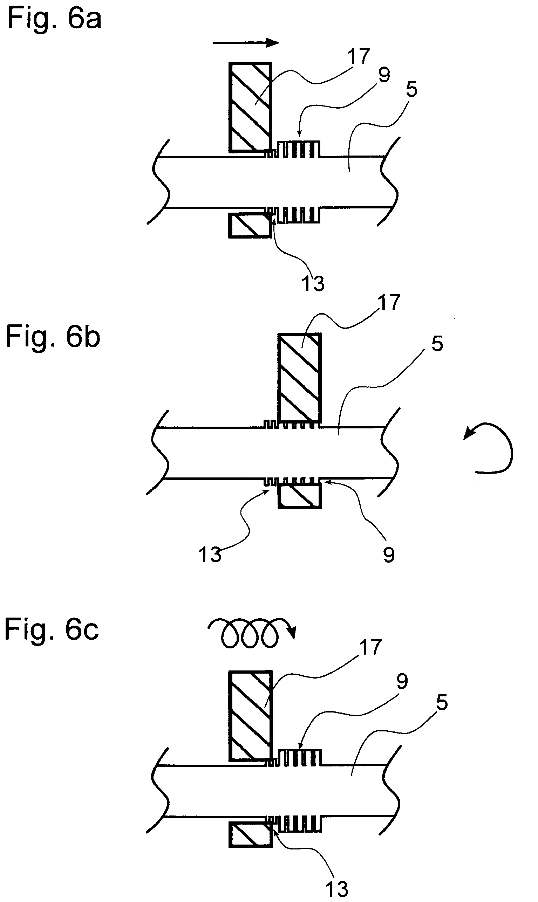

Eine dritte Ausführungsform der Winkeleinstellung zwischen Bauteil 17 und Tragwelle 5 ist in den Figuren 6a und 6b gezeigt. Bei dieser Variante wird das Bauteil 17 zunächst in dem ersten Bereich 9 befestigt (angedeutet durch den Pfeil in Figur 6a). Erst danach erfolgt die Einstellung der Winkelposition (angedeutet durch den Pfeil in Figur 6b).

Bei einer weiteren Ausgestaltung, die in Figur 6c gezeigt ist, werden auch diese beiden Verfahrensschritte zusammengefasst, indem Bauteil 17 und Welle 5 beim Befestigen durch Aufpressen oder Einpressen schraubenartig gegeneinander verdreht werden. Dies wird durch den Pfeil in Figur 6c angedeutet.

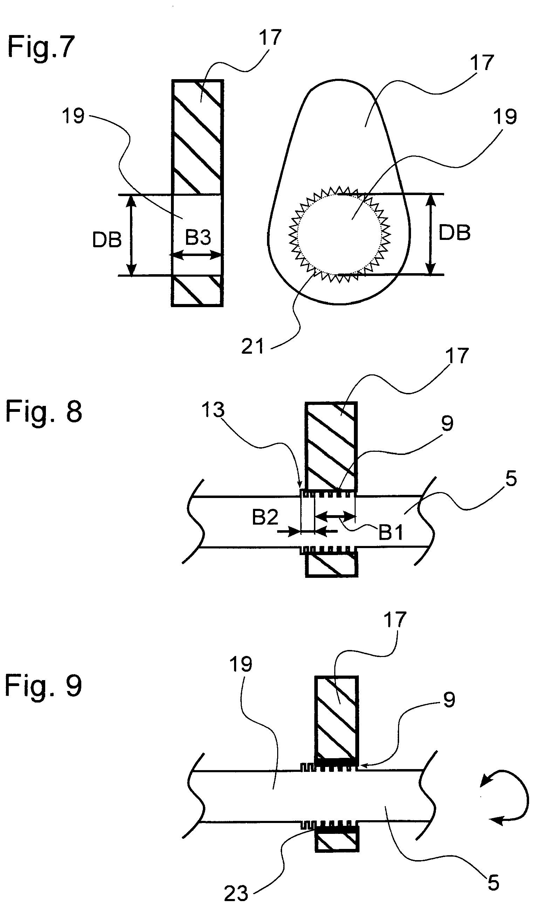

In Figur 7 ist eine weitere Ausführungsform gezeigt, bei der das Bauteil 17 eine Verzahnung 21 in der Durchgangsöffnung 19 aufweist. Der Innendurchmesser DB wird in diesem Fall durch die Spitzen der Verzahnung 21 gebildet.

Eine spezielle Ausgestaltung der Erfindung ist in Figur 8 dargestellt. Bei dieser Variante liegen die zweiten Bereiche 13 zumindest teilweise innerhalb der Durchgangsöffnung 21. Bei der gezeigten Ausführungsform überdeckt die Durchgangsöffnung 21 den ersten Bereich 9 vollständig und den zweiten Bereich 14 teilweise. Zudem sind grenzt der zweite Bereich 13 unmittelbar an den ersten Bereich 9 an. Es gelten die Relationen B3>B1 und B1+B2>B3. Bei einer weiteren (nicht dargestellten) Variante grenzen der erste und der zweite Bereich aneinander an und liegen vollständig innerhalb der Durchgangsöffnung. Es gilt dann die Relation B3>B1+B2.

Figur 9 zeigt eine zusätzliche Weiterbildung der Erfindung. Zwischen dem Bauteil 17 und der Tragwelle 5 ist eine Beschichtung 23 angeordnet, um die Verbindungsfestigkeit zwischen Tragwelle 5 und Bauteil 17 zu erhöhen. Hierdurch kann ein höheres Drehmoment zwischen Bauteil 17 und Tragwelle 5 übertragen werden. Diese Beschichtung 23 kann alternativ vor dem Zusammenfügen von Bauteil 17 und Tragwelle 5 auf dem ersten Bereich 9 aufgebracht werden, oder auf der Innenseite der Durchgangsöffnung 19 des Bauteils 17 oder sowohl auf dem ersten Bereich 9 als auch auf dem Bauteil 19. Selbstverständlich muss die Beschichtung 23 nicht auf den späteren Kontaktbereich zwischen Tragwelle 5 und Bauteil 17 beschränkt werden. Eine Beschichtung der gesamten Tragwelle 5 oder des gesamten Bauteils 17 ist ebenfalls möglich. Die Beschichtung 23 umfasst zum Beispiel Zink oder Phosphat, da sich gezeigt hat, dass diese Materialien die Verbindungsfestigkeit besonders stark verbessern. Eine weitere Erhöhung der Verbindungsfestigkeit wird erreicht, wenn das Bauteil 17 um die erforderliche Winkelposition hochfrequent verdreht wird. Hierbei wird das Bauteil 17 nach Aufpressen oder Einpressen relativ zur Tragwelle 5 um maximal +/- 20° hin und her verdreht bevor die erforderliche Winkelposition eingestellt wird. Dieses Verdrehen ist in Figur 9 durch den Doppelpfeil angedeutet. Durch das Verdrehen kommt es zu einer Diffusion der Beschichtung in die oberflächennahen Regionen von Bauteil 17 und Tragwelle 5, die die Verbindungsfestigkeit weiter erhöht.

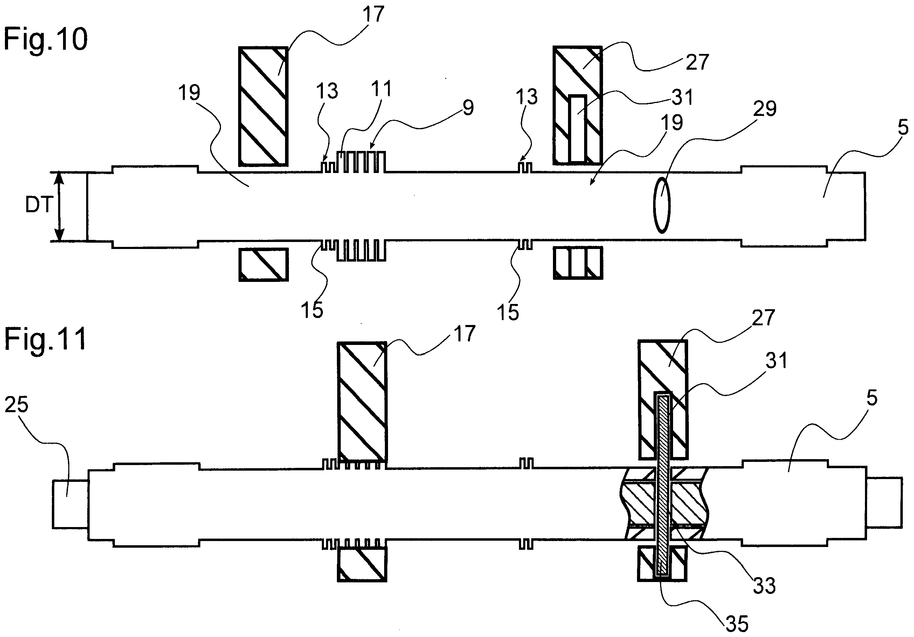

Die Figuren 10 und 11 zeigen eine Ausführungsform, bei der das erfindungsgemäße Verfahren im Rahmen des Zusammenbaus einer verstellbaren Nockenwelle angewendet wird. Bei dieser Ausführungsform ist die Tragwelle 5 als Hohlwelle ausgebildet. In dem Inneren der Tragwelle 5 wird eine Innenwelle 25 konzentrisch zur Tragwelle 5 angeordnet, wobei die Innenwelle 25 relativ zu der Tragwelle 5 verdrehbar ist. Es sind Bauteile 17 vorgesehen, welche in der vorstehend beschriebenen Weise durch eine Pressverbindung mit der Tragwelle 5 verbunden werden. Zusätzlich zu den Bauteilen 17 ist mindestens ein weiteres Bauteil 27 vorgesehen, welches nicht mit der Tragwelle 5 verbunden wird, sondern welches verdrehfest mit der Innenwelle 25 verbunden wird. Die verdrehfeste Verbindung des Bauteils 27 mit der Innenwelle 25 erfolgt z.B. über eine Stiftverbindung, wie weiter unten noch näher erläutert wird. Auf diese Weise sind die Bauteile 27 gemeinsam mit der Innenwelle 25 relativ zu der Tragwelle 5 und den mit der Tragwelle 5 fest verbundenen Bauteilen 17 verdrehbar.

Die Bauteile 17 und 27 werden bevorzugt durch Nocken gebildet, über welche die Gaswechselventile einer Brennkraftmaschine betätigt werden. Durch eine relative Verdrehung der Innenwelle 25 zur Tragwelle 5 wird erreicht, dass die Öffnungs- und Schließzeitpunkte der von den Nocken 27 betätigten Ventile verändert werden. Auf diese Weise wird eine verstellbare Nockenwelle zur Verfügung gestellt, die unter Ausnutzung des erfindungsgemäßen Verfahrens hergestellt worden ist.

Die in Figur 10 dargestellte Tragwelle 5 ist als Hohlwelle ausgebildet. In dem Inneren der Tragewelle 5 ist eine Innenwelle 25 konzentrisch zu dieser angeordnet (vgl. Figur 11). Die Innenwelle 20 ist relativ zur Tragwelle 5 verdrehbar. Die in Figur 10 dargestellte Tragwelle 5 weist einen ersten Bereich 9 mit einer ersten Durchmesseraufweitung 11 auf. Unmittelbar angrenzend an den ersten Bereich 9 befindet sich ein zweiter Bereich 13 mit einer zweiten Durchmesseraufweitung 15. Diese beiden Durchmesseraufweitungen 11 und 15 sind dem Bauteil 17 zugeordnet und dienen dazu, eine Pressverbindung mit dem Bauteil 17 in der voranstehend beschriebenen Weise auszubilden. Benachbart zum Bauteil 27 ist ein zweiter Bereich 13 mit einer zweiten Durchmesseraufweitung 15 angeordnet. Diese zweite Durchmesseraufweitung 15 ist dem Bauteil 27 zugeordnet. Die zweite Durchmesseraufweitung 15 dient zur lösbaren Fixierung des Bauteils 27 auf der Tragwelle 5, wie weiter unten noch näher beschrieben wird. Ferner weist die Tragwelle 5 eine Öffnung 29 auf. Das Bauteil 27, das im dargestellten Ausführungsbeispiel als Nocken ausgebildet ist, weist eine Bohrung 31 auf. Die in der hohlen Tragwelle 5 anzuordnende Innenwelle 25 (vgl. Fig. 11) ist in Fig. 10 nicht dargestellt. Die Öffnung 29 und die Bohrung 31 dienen zur verdrehfesten Befestigung des Bauteils 27 mit der Innenwelle 25. Dies wird weiter unten anhand von Fig. 11 erläutert.

In dem in Figur 10 dargestellten Zustand der verstellbaren Nockenwelle sind bereits mehrere Verfahrensschritte erfolgt. Die Tragwelle 5 wurde bereits gekühlt und/oder die Bauteile 17, 27 wurden erwärmt, so dass die Tragwelle 5 mit ihren ersten Durchmesseraufweitungen 11 und ihren zweiten Durchmesseraufweitungen 15 durch die Durchgangsöffnungen 19 der Bauteile 17, 27 hindurch geschoben werden konnte. Nach dem Durchschieben erfolgte bereits der Temperaturausgleich, indem die Tragwelle 5 erwärmt und/oder die Bauteile 17, 27 abgekühlt wurden.

Während das Bauteil 17 in gleicher Weise behandelt wird wie bereits zuvor mit Bezug auf die Figuren 1-9 beschrieben, erfolgen für das Bauteil 27 andere Verfahrensschritte. Zunächst wird eine vorbestimmte Überdeckung des Bauteils 27 mit dem zugeordneten zweiten Bereich 13 hergestellt, so dass das Bauteil 27 in dem zugeordneten Bereich 13 lösbar fixiert gehalten wird. Dies kann entweder durch Verschieben des Bauteils 27 relativ zur Tragwelle 5 passieren oder durch geeignetes Positionieren vor dem Temperaturausgleich, so dass ein Aufschrumpfen auf die zugeordnete Durchmesseraufweitung 15 stattfindet. Dies ist detailliert mit Bezug auf Figur 4a erläutert.

Das Bauteil 27 kann problemlos wieder von der Durchmesseraufweitung herunter geschoben werden, um die gewünschte relative Winkellage zwischen Tragwelle 5, nicht dargestellter Innenwelle 25 und Bauteil 27 einzustellen. Die Bauteile 17 und 27 können auf diese Weise in einer gewünschten, vorbekannten relativen Winkellage auf der Tragwelle 5 lösbar fixiert gehalten werden. Dadurch wird die Automatisierung des anschließend erfolgenden Aufpressens der Bauteile 17 auf die Tragwelle 5 bzw. der anschließend erfolgenden Stiftverbindung zwischen dem Bauteil 27 und der nicht dargestellten Innenwelle 25 (vgl. Fig. 11) erleichtert und die Taktzeit beim Zusammenbau der Nockenwellen wird erhöht.

Nachdem das Bauteil 27 von der Durchmesseraufweitung 15 herunter geschoben wurde, ist die Tragwelle 5 relativ zu dem Bauteil 27 frei verdrehbar ist. Anschließend werden die Tragwelle 5 und die nicht dargestellte Innenwelle 25 so verdreht, dass die Öffnung 29, die erste Bohrung 33 in der Innenwelle 25 (nicht dargestellt) und die zweite Bohrung 31 in dem Bauteil 27 miteinander fluchten. Danach wird ein Verbindungsstift 35 durch die Öffnung 21 in die erste Bohrung 33 und die zweite Bohrung 31 eingepresst, wodurch das Bauteil 27 verdrehfest mit der Innenwelle 25 verbunden wird. Das Bauteil 27 kann dann durch Verdrehung der Innenwelle 25 relativ zur Tragwelle 5 verdreht werden.

Der zusammengebaute Zustand der verstellbaren Nockenwelle ist in Fig. 11 dargestellt. An den Enden der Tragwelle 5 ragt die Innenwelle 25 aus der Tragwelle 5 heraus. Das Bauteil 17 ist mittels einer kraftschlüssigen oder kraft- und formschlüssigen Pressverbindung mit der Tragwelle 5 verbunden. Im Bereich des Bauteils 27 ist die Wellenanordnung im axialen Halbschnitt dargestellt. Die hohle Tragwelle 5 umgibt die Innenwelle 25. Ein Verbindungsstift 35 ist durch die Öffnung 29 (in Fig. 11 nicht sichtbar) in der Tragwelle 5 in die erste Bohrung 33 der Innenwelle 25 und die zweite Bohrung 31 des Bauteils 27eingepresst. Zwischen der Tragwelle 5 und der Innenwelle 25 ist ein Ringspalt vorhanden. Über den Verbindungsstift 35 ist das Bauteil 27 verdrehfest mit der Innenwelle 25 verbunden. Das Bauteil 27 kann relativ zu der Tragwelle 5 verdreht werden, indem die Innenwelle 25 relativ zur Tragwelle 5 verdreht wird. In Fig. 11 ist links neben dem Bauteil 27 die Durchmesseraufweitung 15 zu erkennen, auf der das Bauteil 27 vorher lösbar fixiert gehalten war.

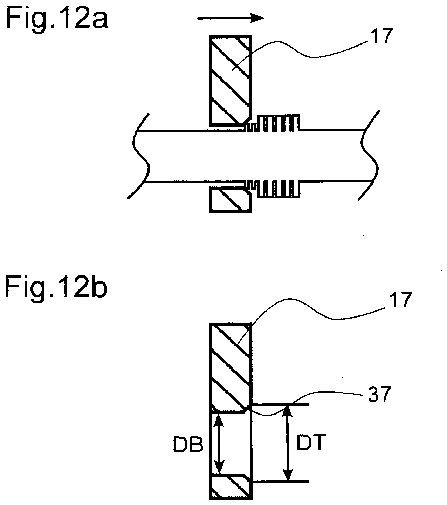

Die Figuren 12a und 12b zeigen eine zusätzliche Weiterbildung der Erfindung. Bei dieser Ausführungsform weist das Bauteil 17 eine trichterförmige Erweiterung 37 auf. Der Außendurchmesser der trichterförmigen Erweiterung 37 ist mit DT bezeichnet. Vorzugsweise ist der Durchmesser DT der Erweiterung größer als der Durchmesser D1 der ersten Bereiche und der Durchmesser D2 der zweiten Bereiche. Bei der Fixierung des Bauteils 17 auf den ersten bzw. zweiten Bereichen findet die Verformung der Bereiche dann nicht durch den Randbereich des Bauteils statt, sonder an der Flanke der trichterförmigen Erweiterung 37. Damit ist die Belastung des Bauteils zur Mitte des Bauteils verschoben. Hierdurch werden zu starke Belastungen am Randbereich des Bauteils vermieden.

## Patentansprüche

1. Verfahren zum Zusammenbau einer Nockenwelle (2) aus einer Tragwelle (5) und mit der Tragwelle (5) zu verbindenden Bauteilen (17), wobei die Bauteile (17) Durchgangsöffnungen (19) zur Aufnahme der Tragwelle (5) aufweisen, **gekennzeichnet durch** die folgenden Verfahrensschritte:
a. es wird eine Tragwelle (5) zur Verfügung gestellt, welche in ersten Bereichen (9), in denen die Bauteile (17) befestigt werden sollen, erste Durchmesseraufweitungen (1 ) aufweist, und in zweiten Bereichen (13), in denen die Bauteile (17) vorpositioniert werden sollen, zweite Durchmesseraufweitungen (15) aufweist, wobei der Durchmesser (D2) in den zweiten Bereichen (13) geringer ist als der Durchmesser (D1 ) in den ersten Bereichen (9);
c. die Tragwelle (5) wird gekühlt und/oder die Bauteile (17) werden erwärmt, so dass die Tragwelle (5) mit ihren ersten und zweiten Durchmesseraufweitungen (11 , 13) durch die Durchgangsöffnungen (19) der Bauteile (17) hindurch geschoben werden kann;
d. die Tragwelle (5) wird durch die Durchgangsöffnungen (19) hindurch geschoben, so dass jedes Bauteil (17) einem zweiten Bereich zugeordnet ist;
e. die Tragwelle (5) wird erwärmt und/oder die Bauteile (17) werden abgekühlt, so dass der Durchmesser (DB) der Durchgangsöffnungen (19) der Bauteile (17) kleiner ist als der Durchmesser (D2) der zugeordneten zweiten Durchmesseraufweitungen (15);
f. es wird eine vorbestimmte Überdeckung der Bauteile (17) mit den den Bauteilen (17) zugeordneten zweiten Bereichen (13) hergestellt, so dass die Bauteile (17) in den zugeordneten zweiten Bereichen (13) lösbar fixiert gehalten werden.
g. die Bauteile (17) werden auf die ihnen zugeordneten ersten Durchmesseraufweitungen ( ) aufgepresst oder die ersten Durchmesseraufweitungen (11 ) werden in die zugeordneten Durchgangsöffnungen (19) der Bauteile (17) eingepresst, wobei jeweils die erforderliche Winkelposition jedes Bauteils (17) relativ zu der Tragwelle (5) vor, während oder nach dem Aufpressen oder Einpressen eingestellt wird.

2. Verfahren zum Zusammenbau eines Moduls für einen Kraftfahrzeugmotor, welches mindestens eine Zylinderkopfhaube (1 ) mit Lageraufnahmen (3) und eine in den Lageraufnahmen (3) gelagerte Nockenwelle (2) umfasst, wobei die Nockenwelle (2) im Zuge des Zusammenbaus des Moduls aus einer Tragwelle (5) und mit der Tragwelle (5) zu verbindenden Bauteilen (17) gebaut wird, und wobei die Bauteile (17) Durchgangsöffnungen (19) zur Aufnahme der Tragwelle (5) aufweisen, **gekennzeichnet durch** folgende Verfahrensschritte:
a. es wird eine Tragwelle (5) zur Verfügung gestellt, welche in ersten Bereichen (9), in denen die Bauteile (17) befestigt werden sollen, erste Durchmesseraufweitungen (1 ) aufweist, und in zweiten Bereichen (13), in denen die Bauteile (17) vorpositioniert werden sollen, zweite Durchmesseraufweitungen (15) aufweist, wobei der Durchmesser (D2) in den zweiten Bereichen (13) geringer ist als der Durchmesser (D1 ) in den ersten Bereichen (9), und in den Bereichen, in denen die fertig gebaute Nockenwelle (2) in den Lageraufnahmen gelagert sein soll, Lagerabschnitte (7) aufweist;
b. die auf der Tragwelle (5) zu befestigenden Bauteile (17) werden in einer vorbestimmten Reihenfolge so positioniert, dass ihre Durchgangsöffnungen (19) fluchtend zu den Lageraufnahmen (3) der Zylinderkopfhaube (1 ) angeordnet sind;
c. die Tragwelle (5) wird gekühlt und/oder die Bauteile (17) werden erwärmt, so dass die Tragwelle (5) mit ihren ersten und zweiten Durchmesseraufweitungen (11, 15) und Lagerabschnitten (7) durch die Durchgangsöffnungen (19) der Bauteile (17) hindurch geschoben werden kann;
d. die Tragwelle (5) wird durch die Lageraufnahmen (3) und die Durchgangsöffnungen (19) hindurch geschoben, so dass in jeder Lageraufnahme (3) ein Lagerabschnitt (7) der Tragwelle (5) angeordnet ist und jedes Bauteil (17) einem zweiten Bereich (13) zugeordnet ist;
e. die Tragwelle (5) wird erwärmt und/oder die Bauteile (17) werden abgekühlt, so dass der Durchmesser (DB) der Durchgangsöffnungen (19) der Bauteile (17) kleiner ist als der Durchmesser (D2) der zugeordneten zweiten Durchmesseraufweitungen;
f. es wird eine vorbestimmte Überdeckung der Bauteile (17) mit den, den Bauteilen (17) zugeordneten, zweiten Bereichen (13) hergestellt, so dass die Bauteile (17) in den zugeordneten zweiten Bereichen (13) lösbar fixiert gehalten werden,
g. die Bauteile (17) werden auf die ihnen zugeordneten ersten Durchmesseraufweitungen (11 ) aufgepresst oder die ersten Durchmesseraufweitungen (11 ) werden in die zugeordneten Durchgangsöffnungen (19) der Bauteile (17) eingepresst, wobei jeweils die erforderliche Winkelposition jedes Bauteils (17) relativ zu der Tragwelle (5) vor, während oder nach dem Aufpressen oder Einpressen eingestellt wird.

3. Verfahren nach einem der Ansprüche 1 oder 2,
**dadurch gekennzeichnet, dass**
die Bauteile (17) vor dem Temperaturausgleich gemäß Verfahrensschritt e) so positioniert werden, dass beim Temperaturausgleich Verfahrensschritt f) gleichzeitig mit erfolgt.

4. Verfahren nach einem der Ansprüche 1 - 3
**dadurch gekennzeichnet, dass**
im Schritt g) die jeweils erforderliche Winkelposition jedes Bauteils (17) relativ zu der Tragwelle (5) vor dem Aufpressen oder Einpressen durch einfaches Verdrehen der Tragwelie (5) um einen bestimmten Winkel eingestellt wird.

5. Verfahren nach einem der Ansprüche 1 - 4
**dadurch gekennzeichnet, dass**
im Schritt g) jedes Bauteil (17) zunächst von den zugeordneten zweiten Bereichen (13) gelöst werden, danach die Winkelposition des Bauteils (17) relativ zu der Tragwelie (5) eingestellt wird und abschließend das Bauteil (17) durch Aufpressen oder Einpressen befestigt wird.

6. Verfahren nach einem der Ansprüche 1 - 4
**dadurch gekennzeichnet, dass**
im Schritt g) die Winkelposition der Bauteile (17) relativ zu der Tragwelle (5) eingestellt wird, während die Bauteile (17) in den zugeordneten zweiten Bereichen (13) lösbar fixiert sind, und abschließend das Bauteil (17) durch Aufpressen oder Einpressen befestigt wird.

7. Verfahren nach einem der Ansprüche 1 - 4
**dadurch gekennzeichnet, dass**
im Schritt g) die Winkelposition der Bauteile (17) relativ zu der Tragwelle (5) eingestellt wird während die Bauteile (17) in den ersten Bereichen (9) befestigt sind.

8. Verfahren nach einem der Ansprüche 1-7,
**dadurch gekennzeichnet, dass**
die Tragwelle (5) als Hohlwelle ausgebildet ist, in deren Innerem eine Innenwelle (25) konzentrisch zur Hohlwelle angeordnet ist, wobei die Innenwelle (25) relativ zur Hohlwelle verdrehbar ist, und dass nach dem Temperaturausgleich gemäß Verfahrensschritt e) mindestens ein Bauteil (27) vorgesehen ist, welches nicht mit der Tragwelle (5) verbunden wird, sondern welches verdrehfest mit der Innenwelle (25) verbunden wird.

9. Verfahren nach Anspruch 8,
**dadurch gekennzeichnet, dass**
das Bauteil (27) mittels einer Stiftverbindung mit der Innenwelle (25) verbunden wird, wobei in der als Hohlwelle ausgebildeten Tragwelle (5) eine Öffnung (29), in der Innenwelle (25) eine erste Bohrung (33) und in dem Bauteil (27) eine zweite Bohrung (31 ) vorgesehen ist, dass die Öffnung (29), die erste Bohrung (33) und die zweite Bohrung (31 ) miteinander fluchtend positioniert werden, und dass ein Verbindungsstift (35) durch die Öffnung (29) in die erste Bohrung (33) und in die zweite Bohrung (31 ) eingepresst wird.

10. Verfahren nach einem der Ansprüche 1-9
**dadurch gekennzeichnet, dass**
die zur Verfügung gestellte Tragwelle (5) in den ersten Bereichen (9) und/oder das Bauteil (17) innerhalb der Durchgangsöffnung (19) eine Beschichtung (23) aufweist, um die Verbindungsfestigkeit zwischen Tragwelle (5) und Bauteil (17) zu erhöhen.

11. Verfahren nach einem der Ansprüche 9-10,
**dadurch gekennzeichnet,**
**dass** die Bauteile (17) in Schritt g) um die erforderliche Winkelposition hochfrequent verdreht werden.

## Claims

1. Method for assembling a camshaft (2) from a support shaft (5) and components (17) to be connected to the support shaft (5), the components (17) having through-openings (19) for receiving the support shaft (5), **characterized by** the following method steps:
a. a support shaft (5) is provided, having first diametrical enlargements (1) in first regions (9), in which the components (17) are to be secured, and second diametrical enlargements (15) in second regions (13), in which the components (17) are to be pre-positioned, the diameter (D2) in the second regions (13) being smaller than the diameter (D1) in the first regions (9);
c. the support shaft (5) is cooled and/or the components (17) are heated up, so that the support shaft (5) can be pushed with its first and second diametrical enlargements (11, 13) through the through-openings (19) of the components (17);
d. the support shaft (5) is pushed through the through-openings (19), so that each component (17) is assigned to a second region;
e. the support shaft (5) is heated up and/or the components (17) are cooled down, so that the diameter (DB) of the through-openings (19) of the components (17) is less than the diameter (D2) of the assigned second diametrical enlargements (15);
f. a predetermined overlap of the components (17) with the second regions (13) assigned to the components (17) is established, so that the components (17) are held in a releasably fixed manner in the assigned second regions (13);
g. the components (17) are pressed onto the first diametrical enlargements () assigned to them or the first diametrical enlargements (11) are pressed into the assigned through-openings (19) of the components (17), the required angular position of each component (17) in relation to the support shaft (5) being respectively set before, during or after the pressing on or pressing in.

2. Method for assembling a module for a motor vehicle engine that comprises at least one cylinder head cover (1) with bearing receptacles (3) and a camshaft (2) mounted in the bearing receptacles (3), the camshaft (2) being constructed in the course of the assembly of the module from a support shaft (5) and components (17) to be connected to the support shaft (5), and the components (17) having through-openings (19) for receiving the support shaft (5), **characterized by** the following method steps:
a. a support shaft (5) is provided, having first diametrical enlargements (1) in first regions (9), in which the components (17) are to be secured, and second diametrical enlargements (15) in second regions (13), in which the components (17) are to be pre-positioned, the diameter (D2) in the second regions (13) being smaller than the diameter (D1) in the first regions (9), and having bearing portions (7) in the regions in which the completed camshaft (2) is to be mounted in the bearing receptacles;
b. the components (17) to be secured on the support shaft (5) are positioned in a predetermined sequence in such a way that their through-openings (19) are arranged in line with the bearing receptacles (3) of the cylinder head cover (1);
c. the support shaft (5) is cooled and/or the components (17) are heated up, so that the support shaft (5) can be pushed with its first and second diametrical enlargements (11, 15) and bearing portions (7) through the through-openings (19) of the components (17);
d. the support shaft (5) is pushed through the bearing receptacles (3) and the through-openings (19), so that a bearing portion (7) of the support shaft (5) is arranged in each bearing receptacle (3) and each component (17) is assigned to a second region (13);
e. the support shaft (5) is heated up and/or the components (17) are cooled down, so that the diameter (DB) of the through-openings (19) of the components (17) is less than the diameter (D2) of the assigned second diametrical enlargements;
f. a predetermined overlap of the components (17) with the second regions (13) assigned to the components (17) is established, so that the components (17) are held in a releasably fixed manner in the assigned second regions (13);
g. the components (17) are pressed onto the first diametrical enlargements (11) assigned to them or the first diametrical enlargements (11) are pressed into the assigned through-openings (19) of the components (17), the required angular position of each component (17) in relation to the support shaft (5) being respectively set before, during or after the pressing on or pressing in.

3. Method according to one of Claims 1 and 2,
**characterized in that**
before the temperature equalization according to method step e), the components (17) are positioned in such a way that method step f) takes place at the same time along with the temperature equalization.

4. Method according to one of Claims 1-3,
**characterized in that**
in step g), the respectively required angular position of each component (17) in relation to the support shaft (5) is set before the pressing on or pressing in by simple turning of the support shaft (5) by a certain angle.

5. Method according to one of Claims 1-4,
**characterized in that**
in step g), each component (17) is first released from the assigned second regions (13), after that the angular position of the component (17) in relation to the support shaft (5) is set and finally the component (17) is secured by pressing on or pressing in.

6. Method according to one of Claims 1-4,
**characterized in that**
in step g), the angular position of the components (17) is set in relation to the support shaft (5) while the components (17) are releasably fixed in the assigned second regions (13), and finally the component (17) is secured by pressing on or pressing in.

7. Method according to one of Claims 1-4,
**characterized in that**
in step g), the angular position of the components (17) is set in relation to the support shaft (5) while the components (17) are secured in the first regions (9).

8. Method according to one of Claims 1-7,
**characterized in that**
the support shaft (5) is formed as a hollow shaft, in the interior of which an inner shaft (25) is arranged concentrically in relation to the hollow shaft, the inner shaft (25) being able to be turned in relation to the hollow shaft, and **in that**, after the temperature equalization according to method step e), at least one component (27) which is not connected to the support shaft (5) but is connected to the inner shaft (25) for rotation therewith is provided.

9. Method according to Claim 8,
**characterized in that**
the component (27) is connected to the inner shaft (25) by means of a pin connection, an opening (29) being provided in the support shaft (5) formed as a hollow shaft, a first bore (33) being provided in the inner shaft (25) and a second bore (31) being provided in the component (27), **in that** the opening (29), the first bore (33) and the second bore (31) are positioned in line with one another, and **in that** a connecting pin (35) is pressed through the opening (29) into the first bore (33) and into the second bore (31).

10. Method according to one of Claims 1-9,
**characterized in that**
the support shaft (5) provided has a coating (23) in the first regions (9) and/or the component (17) has a coating (23) within the through-opening (19), in order to increase the strength of the connection between the support shaft (5) and the component (17).

11. Method according to either of Claims 9 and 10,
**characterized**
**in that**, in step g), the components (17) are turned at high frequency about the required angular position.

## Revendications

1. Procédé de montage d'un arbre (2) à cames à partir d'un arbre porteur (5) et de composants (17) à relier à l'arbre porteur (5),
les composants (17) présentant des ouvertures de passage (19) qui permettent de reprendre l'arbre porteur (5),
le procédé étant **caractérisé par** les étapes suivantes :
a. on prépare un arbre porteur (5) qui présente des évasements (1) de son diamètre dans des premières parties (9) dans lesquelles les composants (17) doivent être fixés et des deuxièmes évasements (15) de son diamètre dans des deuxièmes parties (13) dans lesquelles les composants (17) sont pré-positionnés, le diamètre (D2) étant plus petit dans les deuxièmes parties (13) que le diamètre (D1) dans les premières parties (9),
c. l'arbre porteur (5) est refroidi et/ou les composants (17) sont chauffés de telle sorte que l'arbre porteur (5) puisse être passé à travers les ouvertures de passage (19) des composants (17) par les premiers et les deuxièmes évasements (11, 13) de son diamètre,
d. l'arbre porteur (5) est passé à travers les ouvertures de passage (19) de telle sorte que chaque composant (17) soit associé à une deuxième partie,
e. l'arbre porteur (5) est chauffé et/ou les composants (17) sont refroidis de telle sorte que le diamètre (DB) des ouvertures de passage (19) des composants (17) soit plus petit que le diamètre (D2) des deuxièmes évasements (15) de diamètre qui leur sont associés,
f. un recouvrement prédéterminé des composants (17) et des deuxièmes parties (13) associées aux composants (17) est réalisé de telle sorte que les composants (17) puissent être fixés de manière libérable dans les deuxièmes parties (13) associées,
g. les composants (17) sont repoussés sur les premiers évasements ( ) de diamètre qui leur sont associés ou les premiers évasements (11) de diamètre sont sertis dans les ouvertures de passage (19) des composants (17) qui leur sont associés, la position angulaire nécessaire de chaque composant (17) par rapport à l'arbre porteur (5) étant établie avant, pendant ou après la poussée ou le sertissage.

2. Procédé de montage d'un module pour moteur de véhicule automobile, qui comporte au moins un capot (1) de tête de cylindre doté de logements (3) de palier et d'un arbre (2) à cames monté dans le logement (3) de palier, l'arbre (2) à cames étant monté au cours de l'assemblage du module à partir d'un arbre porteur (5) et de composants (17) à relier à l'arbre porteur (5), les composants (17) présentant des ouvertures de passage (19) qui reprennent l'arbre porteur (5), le procédé étant **caractérisé par** les étapes suivantes :
a. on prépare un arbre porteur (5) qui présente des évasements (1) de son diamètre dans des premières parties (9) dans lesquelles les composants (17) doivent être fixés et des deuxièmes évasements (15) de son diamètre dans des deuxièmes parties (13) dans lesquelles les composants (17) sont pré-positionnés, le diamètre (D2) étant plus petit dans les deuxièmes parties (13) que le diamètre (D1) dans les premières parties (9), l'arbre porteur présentant des parties de palier (7) dans les parties dans lesquelles l'arbre (2) à cames terminé doit être monté dans le logement de palier,
b. les composants (17) à fixer sur l'arbre porteur (5) sont positionnés dans une succession prédéterminée de telle sorte que leurs ouvertures de passage (19) soient disposées en alignement sur les logements (3) de palier du capot (1) des têtes de cylindre,
c. l'arbre porteur (5) est refroidi et/ou les composants (17) sont chauffés de telle sorte que l'arbre porteur (5) puisse être passé à travers les ouvertures de passage (19) des composants (17) par les premiers et les deuxièmes évasements (11, 15) de son diamètre et par les parties de palier (7),
d. l'arbre porteur (5) est passé à travers les logements de palier (3) et les ouvertures de passage (19) de telle sorte que dans chaque logement de palier (3) soit disposée une partie de palier (7) de l'arbre porteur (5) et que chaque composant (17) soit associé à une deuxième partie (13),
e. l'arbre porteur (5) est chauffé et/ou les composants (17) sont refroidis de telle sorte que le diamètre (DB) des ouvertures de passage (19) des composants (17) soit plus petit que le diamètre (D2) des deuxièmes évasements de diamètre qui leur sont associés,
f. un recouvrement prédéterminé des composants (17) et des deuxièmes parties (13) associées aux composants (17) est réalisé de telle sorte que les composants (17) puissent être fixés de manière libérable dans les deuxièmes parties (13) associées,
g. les composants (17) sont repoussés sur les premiers évasements (11) de diamètre qui leur sont associés ou les premiers évasements (11) de diamètre sont sertis dans les ouvertures de passage (19) des composants (17) qui leur sont associés, la position angulaire nécessaire de chaque composant (17) par rapport à l'arbre porteur (5) étant établie avant, pendant ou après la poussée ou le sertissage.

3. Procédé selon l'une des revendications 1 ou 2, **caractérisé en ce que** les composants (17) sont positionnés avant l'équilibrage des températures de l'étape e) du procédé, de sorte que l'étape f) du procédé est exécutée en même temps que l'équilibrage des températures.

4. Procédé selon l'une des revendications 1 à 3, **caractérisé en ce qu'**à l'étape g), la position angulaire nécessaire pour chaque composant (17) par rapport à l'arbre porteur (5) est réglée avant la poussée ou le sertissage, par simple rotation de l'arbre porteur (5) sur un angle défini.

5. Procédé selon l'une des revendications 1 à 4, **caractérisé en ce qu'**à l'étape g), chaque composant (17) est d'abord libéré des deuxièmes parties (13) qui leurs sont associées, la position angulaire du composant (17) par rapport à l'arbre porteur (5) étant ensuite réglée et le composant (17) étant enfin fixé par poussée ou sertissage.

6. Procédé selon l'une des revendications 1 à 4, **caractérisé en ce qu'**à l'étape g), la position angulaire des composants (17) par rapport à l'arbre porteur (5) est ajustée pendant que les composants (17) sont fixés de manière libérable dans les deuxièmes parties (13) qui leurs sont associées, le composant (17) étant enfin fixé par poussée ou sertissage.

7. Procédé selon l'une des revendications 1 à 4, **caractérisé en ce qu'**à l'étape g), la position angulaire des composants (17) est ajustée par rapport à l'arbre porteur (5) pendant que les composants (17) sont fixés dans les premières parties (9).

8. Procédé selon l'une des revendications 1 à 7, **caractérisé en ce que** l'arbre porteur (5) est configuré comme arbre creux à l'intérieur duquel un arbre intérieur (25) est disposé concentriquement par rapport à l'arbre creux, l'arbre intérieur (25) pouvant tourner par rapport à l'arbre creux et **en ce qu'**après l'équilibrage des températures de l'étape e) du procédé, au moins un composant (27) qui n'est pas relié à l'arbre porteur (5) mais qui est relié à rotation solidaire à l'arbre intérieur (25) est prévu.

9. Procédé selon la revendication 8, **caractérisé en ce que** le composant (27) est relié à l'arbre intérieur (25) au moyen d'une liaison à tige, une ouverture (29) étant prévue dans l'arbre porteur (5) configuré comme arbre creux, un premier alésage (33) étant prévu dans l'arbre intérieur (25) et un deuxième alésage (31) étant prévu dans le composant (27), **en ce que** l'ouverture (29), le premier alésage (33) et le deuxième alésage (31) sont alignés les uns sur les autres et **en ce qu'**une tige de liaison (35) est enfoncée par l'ouverture (29) dans le premier alésage (33) et dans le deuxième alésage (31).

10. Procédé selon l'une des revendications 1 à 9, **caractérisé en ce que** dans les premières parties (9), l'arbre porteur (5) préparé présente un revêtement (23) et/ou à l'intérieur de l'ouverture de passage (19), le composant (17) présente un revêtement (23) qui augmente la solidité de la liaison entre l'arbre porteur (5) et le composant (17).

11. Procédé selon l'une des revendications 9 à 10, **caractérisé en ce qu'**à l'étape g), les composants (17) sont tournés à haute fréquence dans la position angulaire nécessaire.
